# EUROPEAN PATENT APPLICATION

(11) **EP 1 511 267 A1**
(43) Date of publication of application: **02.03.2005**
(21) Application number: 03425563.8
(22) Date of filing: 29.08.2003
(51) Int. Cl.: H04L 29/06, H04L 12/58

(54) **Method for managing presence services in a communication system with heterogeneous presence protocols**

(71) Applicant: Siemens Mobile Communications S.p.A., 20126 Milano (IT); Siemens AG, 80333 München (DE)
(72) Inventor: Bossoli, Francesca, 50019 Sesto Fiorentino (FI) (IT); De Zen,Giovanna, 31011 Asolo (TV) (IT); Lipka, Michael, 80687 München (DE)
(74) Representative: Giustini, Delio

(57) **Abstract**

There is provided a method of managing presence services in a communication system (1) including a plurality of communication subsystems (2, 3, 4, 5) each supporting a presence service operating according to a respective local presence protocol, in order to obtain interoperability among the different subsystems. This is obtained by: converting (27a, 32, 42, 52) the presence information generated at an originating subsystem from the local protocol to a common, interoperability protocol. The information organised according to the interoperability protocol are forwarded to a destination subsystem through a signalling network (6) supporting the interoperability protocol, and before being passed to the destination subsystem, are converted (27b, 32, 42, 52) into the local presence protocol of that subsystem. The invention provides also a communication system implementing the method.

## Description

### Field of the Invention

The present invention concerns communication systems supporting presence-based services, and more particularly it refers to a method of managing presence-based services in a communication system with heterogeneous presence protocols, and to a communication system implementing the method.

Preferably, but non exclusively, the invention is intended for managing presence-based services in mobile communication networks.

### Background of the invention

Presence service is a service available since some years for wireline Internet users, generally in connection with Instant Messaging service, to allow users of the Instant Messaging service to keep track of the online status or availability of their correspondents and to be informed of changes in such status/availability. Instant Messaging is a fast, interactive and mainly text based communication method in which the subscribers to the service who are active can immediately see the messages sent by their correspondents. In general, "presence" information communicated within a presence service contains various dynamic information items such as reachability, availability and location of the user for communication. The combination of instant messaging and presence services is called an instant messaging and presence service (IM&P).

The essential features of an IM&P are disclosed in documents RFC 2778 "A Model for Presence and Instant Messaging" by M. Day et al., February 2000, and RFC 2779 "Instance Messaging/Presence Protocol Requirements" by M. Day et al., of the IETF (Internet Engineering Task Force). Said documents are available at IETF site http://www.ietf.org/rfc.htmt.

This kind of service is presently being proposed also for wireless networks.

Presence services for wireless networks provide the ability for a network to manage presence information of a user, of his device, services or service media even whilst roaming. User's presence information may be obtained through input from the user, information supplied by network entities or by elements external to the home network. Consumers of presence information, i.e. watchers, may be internal or external to the home network. Exploitation of this service will enable the creation of wireless-enhanced rich multimedia services along the lines of those currently present in the Internet world.

Specifications for a mobile IM&P have been established for instance by Open Mobile Alliance (OMA) through the Wireless Village (WV) initiative and the .WV specification v 1.2 have been published within IMPS (Instant Messaging and Presence Service) working group "OMA-IMPS-V1_ 2_ Candidate_Package-V1; Definition for IMPS v1.2; Draft Version 2003-01-171.

Besides OMA, also other standardisation bodies have developed, or are developing, presence services related specifications/recommendations utilisable in wireless environment. We may mention here:
- IETF (Internet Engineering Task Force) with SIMPLE (SIP for Instant Messaging and Presence Leveraging Extensions) and XMPP (Extensible Messaging and Presence Protocol). The present status of the work in progress on said items is disclosed in a number of Internet Drafts. For SIMPLE, see e.g. the following ones: draft-ietf-impp-cpim-03 "Common Presence and Instant Messaging (CPIM)"; draft-ietf-impp-pres-02 "Common Profile for Presence (CPP)"; draft-ietf-impp-pidf-07 "Common Presence and Instant Messaging (CPIM) Presence Information Data Format"; draft-ietf-cpim-mapping-01 "CPIM Mapping of SIMPLE Presence and Instant Messaging"; draft-ietf-simple-data-req-02 "Requirements for Manipulation of Data Elements in Session Initiation Protocol (SIP) for Instant Messaging and Presence Leveraging Extensions (SIMPLE) Systems"; draft-ietf-simple-event-list-01 "A Session Initiation Protocol (SIP) Event Notification Extension for Collections"; draft-ietf-simple-presence-10 "A Presence Event Package for Session Initiation Protocol (SIP)"; draft-ietf-simple-winfo-package-05 "A Watcher Information Event Template-Package for the Session Initiation Protocol (SIP)"; draft-ietf-presence-winfo-format-04 "An Extensible Markup Language (XML) Based Format for Watcher Information". For XMPP, see e.g. Internet Drafts draft-ietf-xmpp-core-07 "XMPP Core" and draft-ietf-xmpp-im-07 "XMPP Instant Messaging". IETF Internet Drafts are available at site http://www.ietf.org/internet-drafts;
- PAM (Presence and Availability Management) Forum (see European Standard ES 202915-14)
- 3GPP (3rd Generation Project Partnership) with Presence Services in IMS [IP (Internet Protocol) Multimedia Subsystem] Architecture (see Technical Specifications TS 22.141 and TS 23.141 and Technical Report TR 24.841).

It is not necessary to go in deeper details about the different protocols proposed or being studied, since they are well known to those skilled in the art.

Given the availability of different solutions for presence services, the existence of interoperability problems is immediately apparent. On the one side, a widely agreed solution for mobile market is still missing (in spite of the WV initiative), and it is not acceptable that subscribers of two local mobile operators cannot see their respective presence information and exchange instant messages. On the other side, mobile operators expect to be able to allow the interactions between mobile and Internet users and between mobile and corporate users for any presence enabled services starting from Instant Messaging.

WO-A 01/56308 discloses an instant messaging service utilisable both in wireline and in wireless networks.

On the contrary, the problem of ensuring interoperability between different platforms has not yet found a global solution.

3GPP Technical Specification TS 22.141 identifies the requirements for supporting the service in an interoperable manner both within the wireless network and with external networks, but does not teach how interoperability between different systems can actually be obtained.

Some systems (e.g. Wireless Village or XMPP) propose a protocol-specific gateway that allows the interconnection to foreign systems (e.g. XMPP -> SIMPLE, XMPP -> PAM). Yet the gateway features/behaviour are not been disclosed. In any case, even if the gateways were defined, using protocol-specific gateways would be an expensive solution, in that each provider of the presence service would be compelled to have gateways for all other protocols.

The invention just aims at overcoming the above drawbacks, by providing a "global" solution for the problem of the interoperability between heterogeneous presence services, that is a solution which dispenses with use of a plurality of protocol-specific gateways.

### Summary of the invention

According to a first aspect of the invention, there is provided a method comprising the steps of:
- converting presence information from a client connected to an originating subsystem from the local protocol of that subsystem into an interoperability protocol;
- forwarding the information organised according to said interoperability protocol over a signalling network supporting said protocol; and
- converting presence information to be passed to a client of the service supported by a destination subsystem from said interoperability protocol to the local presence protocol of said destination subsystem.

A global solution, as proposed by the invention, has significant advantages over the protocol-specific gatewaying:
- each subsystem needs to be equipped with the only protocol conversion gateway between its local protocol and the common protocol, and the interface towards the common protocol is identical for all gateways;
- the approach has no limitation: also XMPP and WV can use it, as the proprietary gateway envisaged in the related specifications can be realised toward the common protocol, avoiding the implementation of a gateway for each protocol to interoperate with;
- global rules for protocol conversion can be deployed;
- the usage of a common protocol for interoperability would permit the definition of a common presence document as reference document.

This choice would also result in a simplification for newly deployed systems. In fact, it could represent maybe a constraint, as it would be a standard to which be compliant, but it would guarantee global interoperability to new systems deployed according to approved common protocol.

Any of the existing presence protocols mentioned above could be a candidate to become the common protocol, even if IETF SIMPLE and PAM protocols seem to be better suited to a global solution. Indeed, SIMPLE protocol aims at making independent IM&P applications interoperable through the network, and PAM protocol aims at sharing presence and availability information across multiple services and networks by using PAM Interfaces (APls).

In the preferred embodiment of the invention, SIMPLE is chosen as the common protocol. This choice is justified by a number of reasons:
- SIMPLE is really a plain protocol. It is based on the extensions of SIP (Session Initiation Protocol) (see IETF document RFC 3261 "SIP: Session Initiation Protocol" by J. Rosenberg and H. Schulzrinne), which is a consolidated IP based protocol, supported by most networks. In this respect it is to be appreciated that:
   - SIP infrastructures already exist for supporting voice (so that a fast implementation of the method on existing networks is possible);
   - Mobile network trend leads towards all-IP networks and proposes SIP as the protocol for handling services (the choice is thud compliant with evolution trends);
- SIMPLE is already used within 3GPP - IMS architecture for supporting Presence Services.
- Diffusion: several existing products are based on SIMPLE.
- Flexibility: SIMPLE allows the creation of a number of new headers that permit the mapping of not SIMPLE parameters.
- The protocol is continuously improved within SIMPLE IETF WG.

In a second aspect of the invention, there is provided a communication system in which the means managing the presence-based service in the different subsystems are connected to protocol conversion means for converting presence information generated by service clients connected to the concerned subsystem from the local protocol to an interoperability protocol, and for converting presence information intended for service clients connected to that subsystem from said interoperability protocol to the local protocol, said protocol conversion means being connected through a signalling network supporting said interoperability protocol.

### Brief description of the drawings

The invention will be better understood from the following description of a preferred embodiment, given by way of non-limiting example, with reference to the accompanying drawings, in which:
- Fig. 1 is a schematic block diagram of a communication system employing the invention;
- Fig. 2 is a schematic representation of a gateway; and
- Fig. 3 shows an example of protocol conversion for one of the procedures envisaged for the interoperability protocol.

### Description of the preferred embodiment

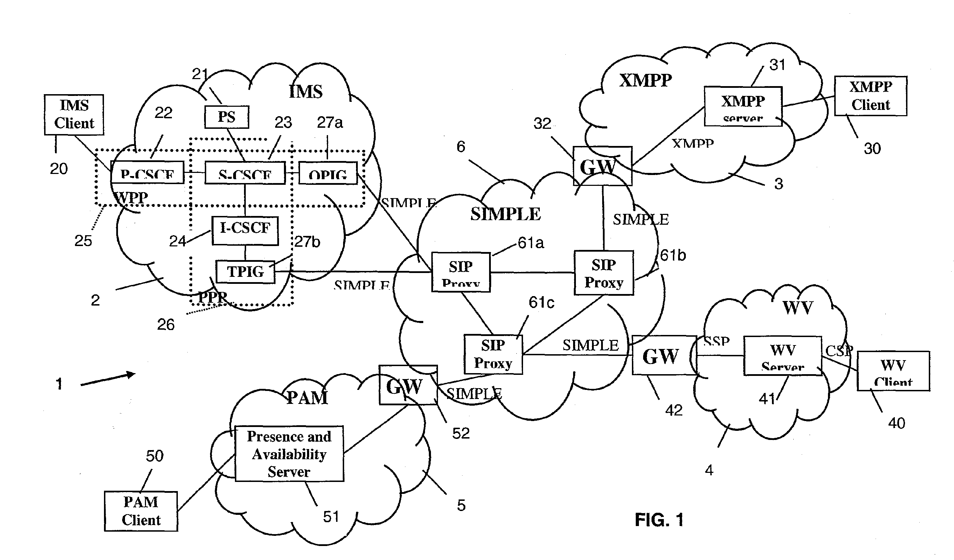

Referring to Fig. 1, a communication system 1 according to the invention is made up of a plurality of communication subsystems (or domains) 2, 3, 4, 5 offering their clients a presence service based on a respective local presence protocol, different from the protocol(s) used by one or more (or even all) of the other subsystems. Subsystems 2 - 5 may include both mobile (or wireless) communication networks and wireline communication networks like the Internet. Reference 20, 30, 40, 50 indicate clients of the presence services in subsystems 2 - 5.

The drawing shows subsystems 2 - 5 supporting presence services based on IMS, XMPP, Wireless Village (WV) and PAM Forum architectures, respectively. Preferably, the local presence protocols in those subsystems are protocols providing for a local interoperability. PAM and XMPP are already defined as interoperability protocols. As to IMS and WV subsystems, it is assumed that IMS subsystem 2 (as well any other subsystem using a SIP-based architecture) uses the SIMPLE protocol and that WV subsystem 4 uses the SSP protocol.

The units managing the presence service are shown in some detail only for subsystem 2. In particular, the drawing shows Presence Server (PS) 21 and the units intended with managing the Call Session Control Functions (CSCF), namely the Proxy-CSCF (P-CSCF, block 22), the serving CSCF (S-CSCF, block 23), and the Interrogating CSFC (I-CSCF, block 24). The functions of said units are defined in the 3GPP specifications mentioned above. Dotted-line blocks 25, 26 labelled PPP and WPP indicate that units 22 to 24 are part of the so-called Presentity Presence Proxy and Watcher Presence Proxy.

For the other subsystems, only XMPP, WV abd Presence and Availability servers 31, 41 and 51, respectively, are indicated.

Further details on how the individual presence services are actually implemented are not necessary for the understanding of the present invention, which does not affect the individual services.

According to the invention, interoperability between the different presence services is obtained through the usage of a common (or interoperability) protocol, which in the preferred embodiment of the invention is the SIMPLE protocol, for the reasons set forth in the introduction of the specification.

The following procedures must be supported by the common protocol:
- Basic procedures: publishing, subscription/unsubscription, notification;
- Other procedures: asking for watcher information; asking for watcher authorization; updating of presence information.

Those procedures are well known to the skilled in the art and they need not to be explained here.

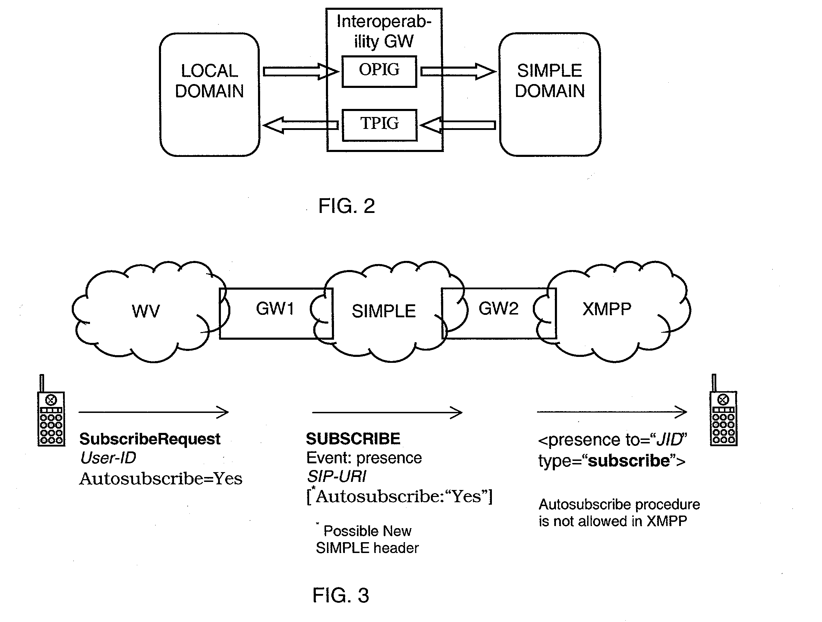

Translation functions are needed to map or convert the procedures of the local presence protocols into the common protocol and vice-versa. The mapping is performed by suitable interoperability gateways connected to subsystems 2 - 5. As shown in Fig. 2, each gateway comprises two gateway elements: the element that maps the local domain presence procedures into SIMPLE based interoperability procedures is denoted OPIG (Originating Presence Interoperability Gateway), and the element that maps SIMPLE based interoperability procedures into local presence procedures Is denoted TPIG (Terminating Presence Interoperability Gateway). In Fig. 1, the two gateway elements are separately shown only for subsystem 2 (blocks 27a, 27b), and are combined into a single block 32, 42, 52, respectively, for the other subsystems..As far as blocks 27a and 27b are concerned, note that their location in WPP and PPP, respectively, corresponds to assuming that IMS client 20 is a watcher subscribing to presence information of a presentity, possibly connected to one of the other subsystems: the messages originated by watcher 20 are thus to be handled by OPIG 27a, whereas TPIG 27b has to handle requests by external watchers for presence information of a presentity in IMS.

The use of a common protocol implies the provision of a corresponding signalling network 6 - in the present case a SIP-SIMPLE signalling network - supporting it and connecting the various subsystems. The structure of a SIP network needs not to be disclosed in detail, and is here schematically shown by a number of SIP proxies 61a, 61b, 61c... connected to each other and to gateways 27a, 27b, 32, 42, 52.

The SIMPLE interfaces of gateways 27a, 27b, 32, 42, 52 are part of SIP network 6 and, using SIP terminology, they act as:
- SIP User Agents (UA) if the local domain is not based on SIP/SIMPLE (gateways 32, 42, 52)
- SIP Proxies if the local domain is based on SIP/SIMPLE (gateways 27a, 27b).

Some translation function is necessary also in case of gateways acting as SIP Proxies. Indeed, a local presence domain could be based on a SIP different from SIMPLE or, in case of a presentity and a watcher connected to two SIMPLE-based domains, the two domains could not be completely equivalent, e.g. they could support different presence information.

The translation function implemented by an OPIG is specific for the local presence protocol but is independent from the presence protocol used by the destination domain. However, in order to allow some form of optimisation, the translation function of the OPIG can evaluate which specific mappings are required and which can be skipped, taking into account the type of remote protocol. For example, if the remote protocol does not support one of the not-basic procedures, such procedure can be terminated by the OPIG. The remote protocol can be determined by analysing the domain part of the resolved "destination" address (i.e. the SIMPLE method Request-URI) and by extracting the related protocol type from a configuration table using the domain value as key. Such configuration table is stored in all gateways applying optimisation functions.

Routing of SIMPLE messages towards the TPIGs is guaranteed by SIP routing.

The translation functions performed by the gateways carry out a mapping between local protocol messages and parameters and SIMPLE messages, headers and fields. The following rules for the mapping of WV/PAM/XMPP message parameters (local parameters) towards SIMPLE headers and fields have been envisaged:
1. whenever a parameter to be mapped exists with the same meaning in both protocols, the local parameter is mapped in the equivalent SIMPLE header and/or field, e.g. User-ID (WV) -> SIP-URI (SIMPLE)
2. in case a local parameter cannot be mapped as defined above, a new SIMPLE header containing the relevant information is defined for the SIMPLE message associated to the local message, e.g.

### SubscribeRequest (WV): Auto-Subscribe -> New "AutoSubscribe" header of SUBSCRIBE method (SIMPLE)

Moreover, the following rules for gateway behaviour have been envisaged, in order to define the mapping of local parameters values into SIP/PIDF/XCAP header/values:
1. in the translation from local domain to SIMPLE domain, all parameters should be mapped and transferred towards the destination domain, unless the destination domain does not support some of them (this can be determined, as explained above, by analysing the domain part of the resolved "destination" address);
2. in the translation from SIMPLE to local domain, parameters which are managed by the destination domain are mapped, and the others are discarded/ ignored.

The appended Table I details the mappings between the common presence interoperability protocol (i.e. SIMPLE) procedures and the local protocol procedures for a number of the above mentioned procedures. Appended Tables 2 to 4 show in the greater detail the conversion from WV protocol to SIMPLE protocol for the basic procedures.

An example of application of the invention is shown also in Fig. 3 for the case of an Instant Messaging service between WV and XMPP technologies, in particular the case of a WV client subscribing for presence information of a Jabber user (XMPP).

The WV user performs subscription procedure by sending a SubscribeRequest message towards the user identified by User-ID. Auto-Subscribe parameter is set to "Yes", so that WV user asks for automatic subscription (unsubscription) to the presence attributes being enabled when a new user is added to (deleted from) the contact list.

GW1 (corresponding to the OPIG part of block 42 in Fig. 1) translates WV into SIMPLE protocol according to rules described above. The message SubscribeRequest is translated into SUBSCRIBE request: User-ID parameter is mapped into SIP-URI, while Auto-Subscribe parameter requires the creation of a new SIP header (i.e. Autosubscribe). Anyway, taking into account the protocol of the destination domain (XMPP), the specific mapping of Auto-Subscribe parameter can be skipped, as it is not supported within XMPP.

GW2 (corresponding to the TPIG part of block 32 in Fig. 1) translates SIMPLE protocol into XMPP. SUBSCRIBE request is translated into XMPP Subscription Request and SIP-URI is mapped into JID.

It is evident that the above description has been given by way of non-limiting example and that changes and modifications are possible without departing from the scope of the invention. Thus other local protocols can be envisaged; further procedures can be implemented in the common protocol, and the latter could be different from SIMPLE. On the other hand, any change or addition of a protocol merely entails the change or addition of the corresponding gateway.

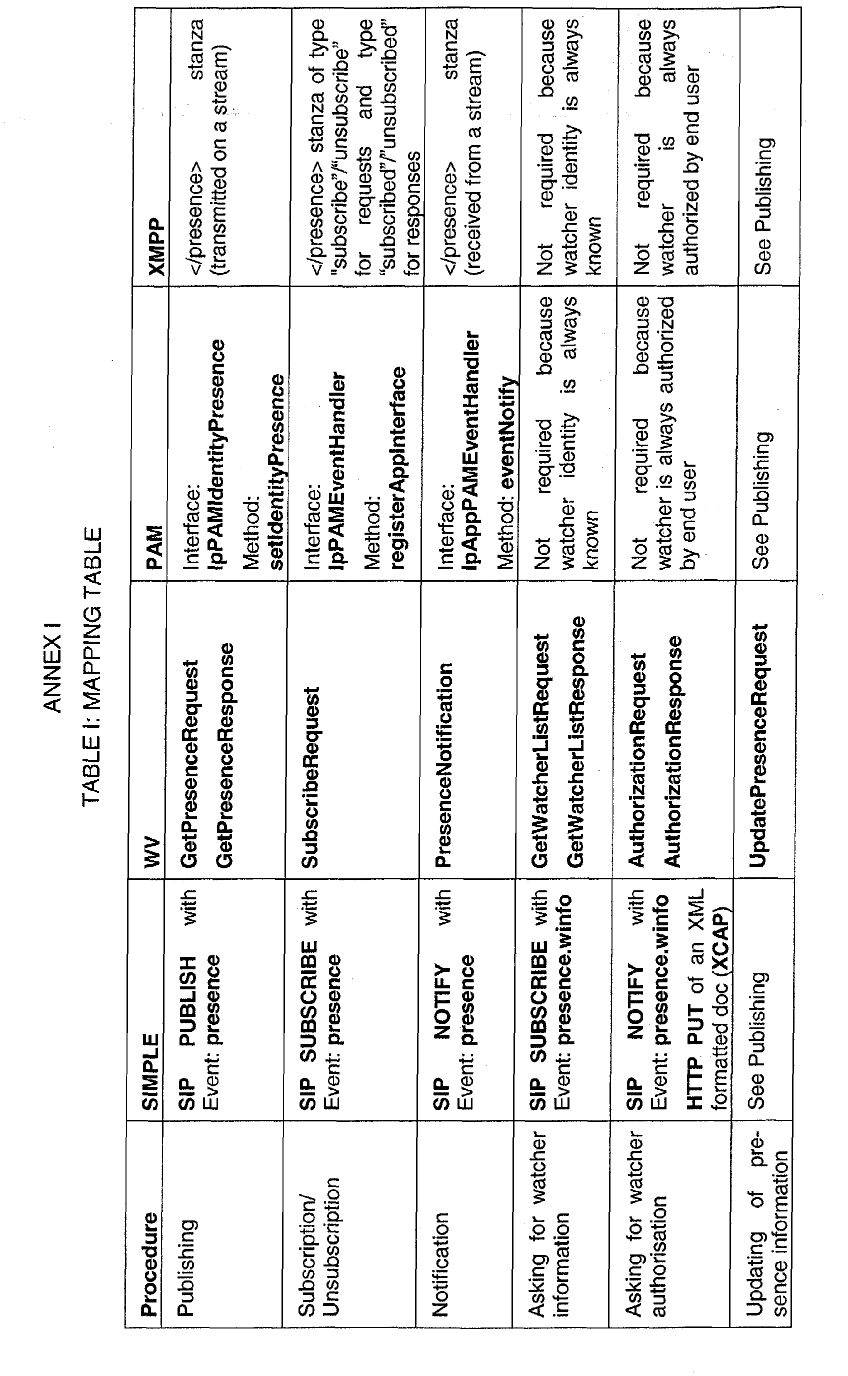

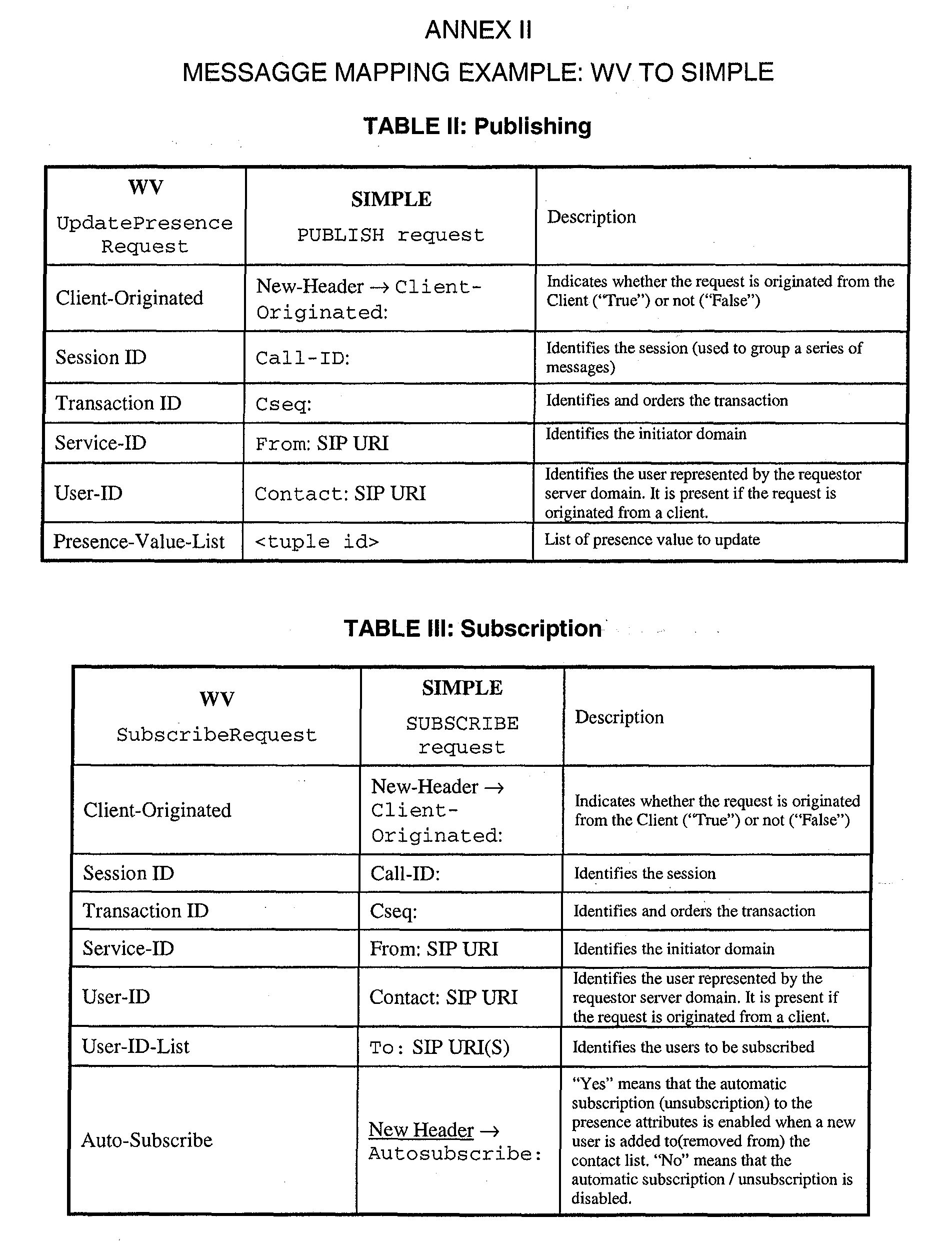

**TABLE IV:**

| **Notification** | | |
|---|---|---|
| **WV** Presence Notification | **SIMPLE** NOTIFY | Description |
| Client-Originated | New-Header → Client-Originated: | Indicates whether the request is originated from the Client ("True") or not ("False") |
| Session ID | Call - ID: | Identifies the session (used to group a series of messages) |
| Transaction ID | Cseq: | Identifies and orders the transaction |
| Service-ID | From: SIP URI | Identifies the initiator domain |
| User-ID | Contact: SIP URI | User represented by the requestor server domain. It is present if the request is originated from a client. |
| Subscribing-User-ID-List | To: SIP URI (S) | Users who subscribed to the presence change |
| Presence-Value-List | <tuple i d> | List of presence value to update |

## Claims

1. A method of managing presence-based services in a communication system (1) including a plurality of communication subsystems (2, 3, 4, 5) each supporting a presence service operating according to a respective local presence protocol, **characterised in that** the method comprises the steps of:
- converting presence information produced by a client (20, 30, 40, 50) of the service supported by an originating subsystem (2, 3, 4, 5) from the local protocol of that subsystem into an interoperability protocol;
- forwarding the information organised according to said interoperability protocol over a signalling network (6) supporting said protocol; and
- converting presence information to be passed to a client (20, 30, 40, 50) of the service supported by a destination subsystem from said interoperability protocol into the presence protocol of said destination subsystem (2, 3, 4, 5).

2. A method as claimed in claim 1, **characterised in that** the conversion from the local into the interoperability protocol comprises evaluating which specific mappings are required and which can be skipped, taking into account the protocol of the destination subsystem.

3. A method as claimed in claim 1 or 2, wherein said interoperability protocol is the SIMPLE ("SIP for Instant Messaging and Presence Leveraging Extensions") protocol.

4. A method as claimed in claim 3, **characterised in that**, for conversion from a local protocol into the SIMPLE protocol:
a) whenever a parameter to be mapped exists with the same meaning in both protocols, the local parameter is mapped in the equivalent SIMPLE header and/or field, and
b) in case a local parameter cannot be mapped as in a), a new SIMPLE header containing the relevant information is defined for the SIMPLE message associated to the local message.

5. A method as claimed in claim 3 or 4, **characterised in that**, for conversion from the SIMPLE protocol into the local protocol, parameters that are common to both protocols are mapped into the local protocol, whereas the others are ignored.

6. A method as claimed in claim 1 or 2, **characterised in that** one or more of said subsystems (2, 3, 4, 5) are mobile communication networks.

7. A communication system (1) made up of a plurality of communication subsystems (2, 3, 4, 5) each including means (21-26, 31, 41, 51) for managing a presence-based service operating according to a respective local presence protocol, **characterised in that** the managing means (21-26, 31, 41, 51) in each said subsystem (2, 3, 4, 5) are connected to protocol conversion means (27a, 27b; 32, 42, 52) for converting presence information generated by service clients (20a, 20b, 30, 40, 50) connected to the concerned subsystem (2, 3, 4, 5) from the local protocol to an interoperability protocol, and for converting presence information intended for service clients (20a, 20b, 30, 40, 50) connected to that subsystem (2, 3, 4, 5) from said interoperability protocol to the local protocol, said protocol conversion means (27a, 27b; 32, 42, 52) being connected through a signalling network (6) supporting said interoperability protocol.

8. A communication system as claimed in claim 7, **characterised in that** said protocol conversion means (27a, 27b; 32, 42, 52) are arranged to evaluate, at the conversion from the local into the interoperability protocol, which specific mappings are required and which can be skipped, taking into account the protocol of the destination subsystem.

9. A communication system as claimed in claim 7 or 8, **characterised in that** said protocol conversion means (27a, 27b; 32, 42, 52) are arranged to convert the local protocol into SIMPLE. ["SIP for Instant Messaging and Presence Leveraging Extensions", SIP standing for "Session Initiation Protocol] - protocol and vice-versa, and said signalling network (6) is a SIP-based signalling network.

10. A communication system as claimed in claim 9, **characterised in that**, for conversion from the local protocol into the SIMPLE protocol, said protocol conversion means (27a, 27b; 32, 42, 52) are arranged to:
a) map a parameter of the local protocol that is common to the SIMPLE protocol into a corresponding header and/or field of the SIMPLE protocol;
b) create, for a parameter of the local protocol that is not common to the SIMPLE protocol, a new SIMPLE header containing the information conveyed by said parameter.

11. A communication system as claimed in claim 9 or 10, **characterised in that**, for conversion from the local protocol into the SIMPLE protocol, said protocol conversion means ((27a, 27b; 32, 42, 52) are arranged to map into the local protocol parameters that are common to both protocols, and to discard the other parameters.

12. A communication system as claimed in claim 10 or 11, **characterised in that** said protocol conversion means (27a, 27b; 32, 42, 52) act as SIP User Agents (UA) if they are connected to a subsystem (3, 4, 5) that is not based on SIP/SIMPLE, and as SIP Proxies if they are connected to a subsystem (2) that is based on SIP/SIMPLE

13. A communication system as claimed in any of claims 7 to 12, **characterised in that** one or more of said subsystems (2, 3, 4, 5) are mobile communication networks.
